# EUROPEAN PATENT APPLICATION

(11) **EP 3 940 877 A1**
(43) Date of publication of application: **19.01.2022**
(21) Application number: 20866912.7
(22) Date of filing: 18.05.2020
(51) Int. Cl.: H01M 50/147, H01M 50/171, H01M 50/109, H01M 50/547, H01M 50/559, H01M 10/04, H01M 50/148, H01M 50/172, H01M 50/181, H01M 50/188

(54) **BATTERY, AND POWERED DEVICE PROVIDED WITH BATTERY**

(71) Applicant: Ningde Amperex Technology Ltd., Ningde, Fujian 350900 (CN)
(72) Inventor: WANG, Hui, Ningde, Fujian 350900 (CN); LIN, Liqing, Ningde, Fujian 350900 (CN); PENG, Yejun, Ningde, Fujian 350900 (CN)
(74) Representative: Klunker IP Patentanwälte PartG mbB
(86) International application number: PCT/CN2020/090898
(87) International publication number: WO 2021/232204

(57) **Abstract**

A battery (100), including a battery cell (10). The battery (100) further includes: a first housing body (20), including a first surface (201) and a second surface (202) that are opposite to each other, wherein the second surface (202) is located between the battery cell (10) and the first surface (201), and the first housing body (20) is provided with a via hole (21) that penetrates through the first surface (201) and the second surface (202); and an electrode post (30) fixed in the via hole (21) by a binder (40) and electrically connected to the battery cell (10). Space utilization efficiency and an energy density of the battery (100) according to this application are relatively high. This application further provides an electric device (200) including the battery (100).

## Description

### TECHNICAL FIELD

This application relates to a battery and an electric device containing the battery.

### BACKGROUND

Small internal space of wearable devices such as a wireless Bluetooth headset imposes higher requirements on an energy density of a battery. A conventional button battery usually includes a housing body, a top cover, a battery cell, and the like. The battery cell is located inside the housing body, and the top cover is located at an opening at an upper end of the housing body. An electrode post is arranged through the top cover. A sealing structure (such as a sealing ring) needs to be disposed between the electrode post and the top cover.

However, the sealing structure increases an overall thickness of the top cover. Consequently, space utilization is inefficient, and the energy density of the battery is relatively low.

### SUMMARY

In view of the foregoing situation, it is necessary to provide a battery that is relatively efficient in space utilization and relatively high in an energy density.

In addition, it is necessary to provide an electric device containing the battery.

This application provides a battery, including a battery cell. The battery further includes:
a first housing body, including a first surface and a second surface that are opposite to each other, where the second surface is located between the battery cell and the first surface, and the first housing body is provided with a via hole that penetrates through the first surface and the second surface; and
an electrode post, fixed in the via hole by a binder, where the electrode post is electrically connected to the battery cell.

In some embodiments of this application, a height by which the electrode post protrudes outside of the first surface of the first housing body of the battery is less than or equal to 0.3 mm.

In some embodiments of this application, the electrode post is flush with the first surface.

In some embodiments of this application, a height by which the electrode post protrudes outside of the second surface of the first housing body of the battery is less than or equal to 0.3 mm.

In some embodiments of this application, the electrode post is flush with the second surface.

In some embodiments of this application, the electrode post is provided with a groove.

In some embodiments of this application, a depth of the groove is 0 mm to 0.1 mm.

In some embodiments of this application, the binder is at least one selected from the group consisting of epoxy adhesive, structural adhesive, or ultraviolet adhesive.

In some embodiments of this application, a thickness of the binder is in the range of from 0.005 mm to 0.1 mm.

In some embodiments of this application, the electrode post includes an electrode post body and an electrode post pad connected to the electrode post body. A width of the electrode post pad is greater than a width of the electrode post body. The electrode post body is fixed in the via hole. The electrode post pad is fixed on the first surface or the second surface. The electrode post body is flush with the first surface and the second surface. A height by which the electrode post pad protrudes outside of the first surface or the second surface is less than or equal to 0.3 mm.

In some embodiments of this application, the battery further includes a second housing body configured to connect to the first housing body, and the battery cell is accommodated in the second housing body.

This application further provides an electric device, where the electric device includes the battery described above.

In this application, the electrode post is fixed in the via hole by the binder. The binder can play a similar role as the sealing structure, and therefore, can replace the sealing structure used in the prior art, thus reducing the overall thickness of the battery caused by the sealing structure in the prior art, thereby improving space utilization of the battery and increasing the energy density of the battery.

### BRIEF DESCRIPTION OF DRAWINGS

FIG. 1 is a schematic structural diagram of a battery according to an embodiment of this application;
FIG. 2 is a cross-sectional view of the battery shown in FIG. 1 along an II-II section line and a local enlarged view;
FIG. 3 is schematic structural diagram of an electrode post shown in FIG. 2;
FIG. 4 is a local enlarged view of a battery according to another embodiment of this application;
FIG. 5 is a local enlarged view of a battery according to still another embodiment of this application;
FIG. 6 is a local enlarged view of a battery according to still another embodiment of this application;
FIG. 7 is schematic structural diagram of the electrode post shown in FIG. 4, FIG. 5, or FIG. 6;
FIG. 8 is a schematic structural diagram of an electrode post according to another embodiment of this application;
FIG. 9 is a cross-sectional view of the electrode post shown in FIG. 8 along an IX-IX section line; and
FIG. 10 is a structural module diagram of an electric device according to an embodiment of this application.

### Reference numerals:

| | |
|---|---|
| Battery | 100 |
| Battery cell | 10 |
| Protective adhesive | 11 |
| First housing body | 20 |
| First surface | 201 |
| Second surface | 202 |
| Via hole | 21 |
| Injection hole | 22 |
| Electrode post | 30 |
| Electrode post body | 301 |
| Electrode post pad | 302 |
| Flange | 3021 |
| Groove | 31 |
| Binder | 40 |
| First bonding portion | 401 |
| Second bonding portion | 402 |
| Second housing body | 50 |
| Explosion-proof valve | 51 |
| First tab | 60 |
| Second tab | 61 |
| Insulation spacer | 62 |
| Electric device | 200 |

This application is further described below with reference to the following specific embodiments and the foregoing drawings.

### DETAILED DESCRIPTION OF EMBODIMENTS

The following clearly and fully describes the technical solutions in the embodiments of this application with reference to the drawings hereof. Apparently, the described embodiments are merely a part of but not all of the embodiments of this application. All other embodiments derived by a person of ordinary skill in the art based on the embodiments of this application without making any creative efforts shall fall within the protection scope of this application.

Unless otherwise defined, all technical and scientific terms used herein have the same meanings as usually understood by a person skilled in the technical field of this application. The terms used in the specification of this application herein are merely intended for describing specific embodiments but are not intended to limit this application.

The following describes some embodiments of this application in detail with reference to drawings. To the extent that no conflict occurs, the following embodiments and the features in the embodiments may be combined with each other.

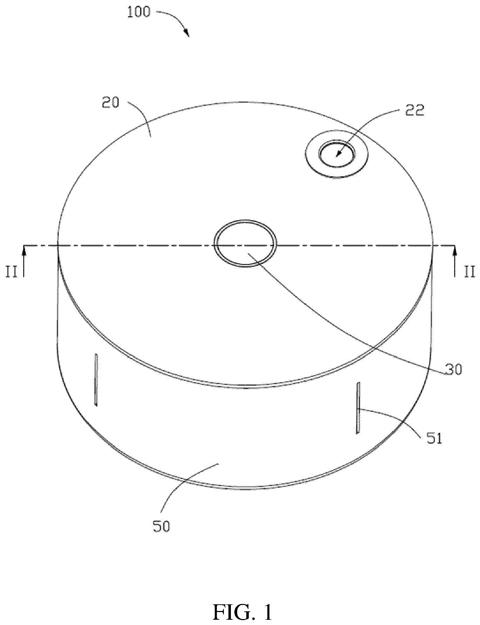

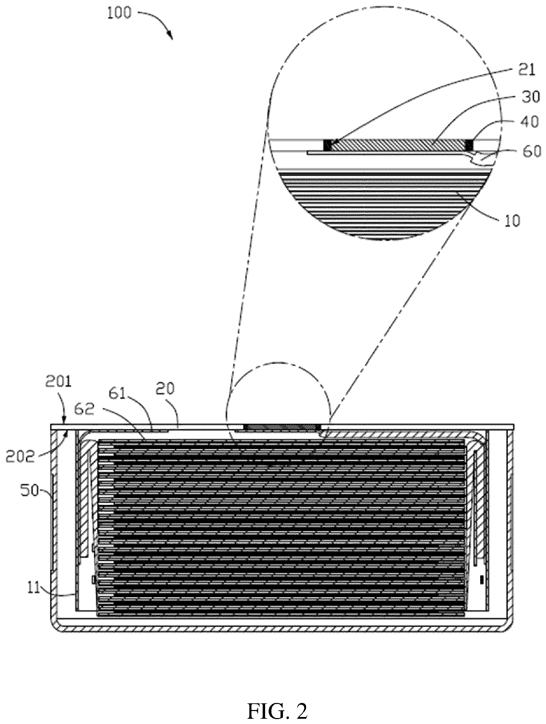

Referring to FIG. 1 and FIG. 2, an embodiment of this application provides a battery 100, including a battery cell 10, a first housing body 20, and an electrode post 30.

The first housing body 20 includes a first surface 201 and a second surface 202 that are opposite to each other. The second surface 202 is located between the battery cell 10 and the first surface 201. The first housing body 20 is provided with a via hole 21 that penetrates through the first surface 201 and the second surface 202.

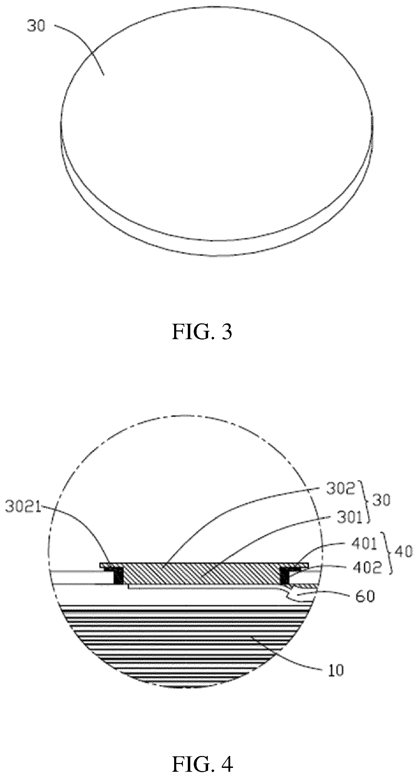

Referring to FIG. 3, the electrode post 30 is fixed in the via hole 21 by a binder 40, and is electrically connected to the battery cell 10.

In this application, the electrode post 30 is fixed in the via hole 21 by the binder 40. The binder 40 can play a similar role as the sealing structure, and therefore, can replace the sealing structure used in the prior art, thus reducing the overall thickness of the battery caused by the sealing structure in the prior art, thereby improving space utilization of the battery 100 and increasing the energy density of the battery 100.

A height by which the electrode post 30 protrudes outside of the first surface 201 of the first housing body 20 of the battery 100 is less than or equal to 0.3 mm. In this application, the height by which the electrode post 30 protrudes outside of the first surface 201 is controlled to be within 0.3 mm, thereby reducing external space of the battery 100 occupied by the electrode post 30 and reducing the thickness of the battery 100.

Referring to FIG. 3, in this embodiment, the electrode post 30 is flush with the first surface 201. In this application, the electrode post 30 is arranged flush with the first surface 201 (that is, the electrode post 30 does not protrude outside of the first surface 201). In this way, the electrode post 30 is prevented from protruding outside of the battery 100, the overall thickness of the battery 100 is not increased, and the battery 100 is thinner.

As shown in FIG. 4, in another embodiment, the height by which the electrode post 30 protrudes outside of the first surface 201 of the first housing body 20 of the battery 100 may be greater than 0 mm but less than or equal to 0.3 mm. By setting a smaller height by which the electrode post 30 protrudes outside of the first surface 201, the size of the battery 100 is smaller, thus increasing the versatility of the battery 100.

A height by which the electrode post 30 protrudes outside of the second surface 202 of the first housing body 20 of the battery 100 is less than or equal to 0.3 mm. In this application, the height by which the electrode post 30 protrudes outside of the second surface 202 is controlled to be within 0.3 mm, thereby reducing internal space of the battery 100 occupied by the electrode post 30, improving space utilization efficiency of the battery 100, and thus increasing the energy density of the battery 100.

Referring to FIG. 3, in this embodiment, the electrode post 30 is flush with the second surface 202. In this application, the electrode post 30 is arranged flush with the second surface 202 (that is, the electrode post 30 does not protrude outside of the second surface 202). In this way, the electrode post 30 is prevented from extending into the interior of the battery 100, thereby improving the energy density of the battery 100. In addition, the electrode post 30 can be prevented from piercing an electrode plate of the battery cell 10 during a crush test, safety hazards are reduced.

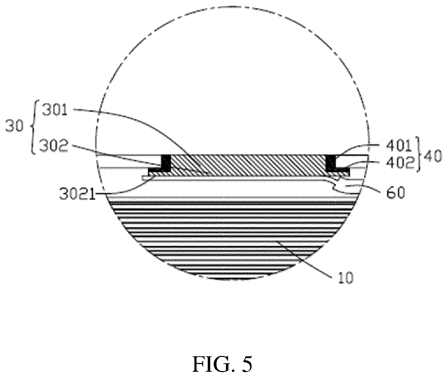

As shown in FIG. 5, in another embodiment, the height by which the electrode post 30 protrudes outside of the second surface 202 of the first housing body 20 of the battery 100 may be greater than 0 mm but less than or equal to 0.3 mm. The electrode post 30 is arranged to protrude outside of the second surface 202 by a relatively small height, thereby preventing the electrode post 30 from extending too much into the interior of the battery 100 and improving safety of the battery 100.

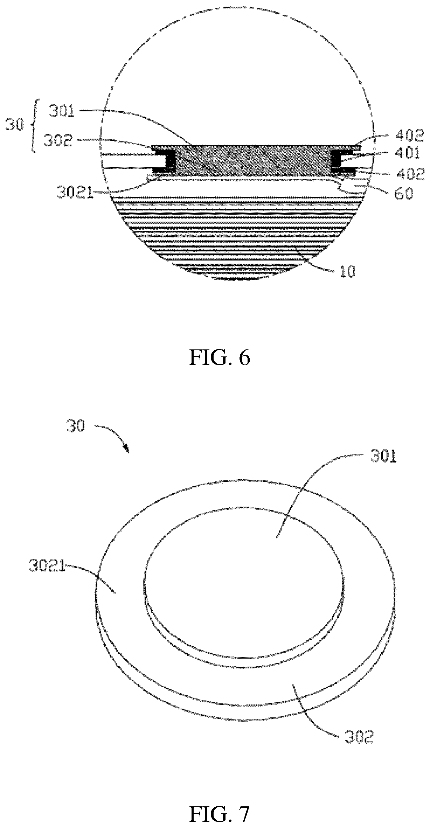

Referring to FIG. 7, when the electrode post 30 protrudes outside of the first surface 201 or the second surface 202, the electrode post 30 may include an electrode post body 301 and an electrode post pad 302 connected to the electrode post body 301. A width of the electrode post pad 302 is greater than a width of the electrode post body 301. The electrode post body 301 is fixed in the via hole 21. The electrode post body 301 is flush with the first surface 201 and the second surface 202. The electrode post pad 302 may be fixed onto the first surface 201. The height by which the electrode post pad 302 protrudes outside of the first surface 201 is less than or equal to 0.3 mm. Referring to FIG. 7, in another embodiment, the electrode post pad 302 may also be fixed onto the second surface 202. The height by which the electrode post pad 302 protrudes outside of the second surface 202 is less than or equal to 0.3 mm.

Further, referring to FIG. 4 and FIG. 5, the binder 40 may include a first bonding portion 401 and a second bonding portion 402 connected to the first bonding portion 401. The first bonding portion 401 is located between the electrode post body 301 and an inner wall of the via hole 21. The second bonding portion 402 is located between the electrode post pad 302 and the first surface 201, or located between the electrode post pad 302 and the second surface 202. In another embodiment, the second bonding portion 402 may also be located between the electrode post pad 302 and the first surface 201 and between the electrode post pad 302 and the second surface 202.

Referring to FIG. 6, in another embodiment, the height by which the electrode post 30 protrudes outside of the first surface 201 of the first housing body 20 of the battery 100, and the height by which the electrode post 30 protrudes outside of the second surface 202, are both less than or equal to 0.3 mm.

Correspondingly, the electrode post 30 may further include the electrode post body 301 and two electrode post pads 302 that are both connected to the electrode post body 301. A width of each of the electrode post pads 302 is greater than the width of the electrode post body 301. To be specific, the electrode post 30 is H-shaped. The electrode post body 301 is fixed in the via hole 21. One of the electrode post pads 302 is fixed onto the first surface 201, and the other electrode post pad 302 is fixed onto the second surface 202. The electrode post body 301 is flush with both the first surface 201 and the second surface 202. The heights by which two electrode post pads 302 protrude from the first surface 201 and the second surface 202 respectively are less than or equal to 0.3 mm.

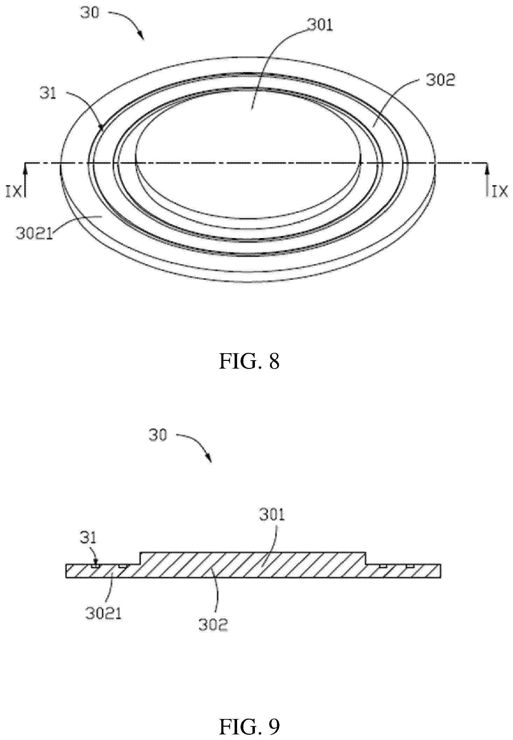

Referring to FIG. 8 and FIG. 9, in this embodiment, the electrode post 30 is provided with a groove 31. The electrode post pad 302 may include a flange 3021 fixed onto the first surface 201 or the second surface 202. The flange 3021 is provided with the groove 31 facing toward the first surface 201 or the second surface 202. In another embodiment, the electrode post pad 302 includes the flange 3021 fixed onto both the first surface 201 and the second surface 202. The flange 3021 is provided with the groove 31 facing toward both the first surface 201 and the second surface 202. Further, the groove 31 is filled with the second bonding portion 402. In this application, the groove 31 is provided to increase a contact area between the binder 40 and the first housing body 20, thereby increasing a bonding strength between the electrode post 30 and the first housing body 20. A depth of the groove 31 is in the range of from 0 mm to 0.1 mm.

In this embodiment, the binder 40 is at least one selected from the group consisting of epoxy adhesive, structural adhesive, or ultraviolet (UV) adhesive. The binder 40 is configured to fix the electrode post 30 into the via hole 21. In other embodiments, the binder 40 may also be other adhesives capable of bonding.

A thickness of the binder 40 is in the range of from 0.005 mm to 0.1 mm. By controlling the thickness of the binder 40, this application not only enables the binder 40 to be sufficiently capable of bonding and fixing, but also prevents the binder 40 from occupying too much space of the battery 100. Therefore, the binder 40 not only plays a similar role as the sealing structure, but also saves the space of the battery 100 occupied by the sealing structure .

Referring to FIG. 1 and FIG. 2, the battery 100 further includes a second housing body 50 configured to connect to the first housing body 20. The battery cell 10 is accommodated in the second housing body 50. The second housing body 50 may be connected to the first housing body 20 by welding or adhesively bonding. An explosion-proof valve 51 is disposed on the second housing body 50. The explosion-proof valve 51 is configured to relieve pressure of the battery cell 10 rapidly and prevent explosion.

In this embodiment, an injection hole 22 is further disposed on the first housing body 20. The injection hole 22 is configured to inject an electrolytic solution into the battery 100.

In this embodiment, the battery cell 10 is a laminated structure. A protective adhesive 11 is disposed on an outer layer of the battery cell 10. The protective adhesive 11 is configured to protect the battery cell 10.

In this embodiment, the battery 100 further includes a first tab 60 and a second tab 61. The first tab 60 may be connected to the electrode post 30 by welding. The second tab 61 may be connected to the first housing body 20 by welding. In this embodiment, both the first tab 60 and the electrode post 30 are insulated from the battery cell 10 by an insulation spacer 62.

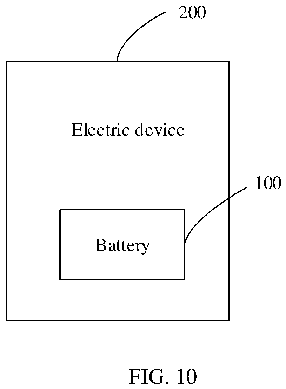

Referring to FIG. 10, this application further provides an electric device 200. The electric device 200 includes the battery 100 described above. The electric device 200 may be a consumer electronic product, such as a smart phone, a Bluetooth headset, or the like. Understandably, in other embodiments, the electric device 200 may also be an electric tool, an energy storage device, a power device, or the like. For example, the electric device 200 may also be an electric vehicle.

In this application, the electrode post 30 is fixed in the via hole 21 by the binder 40. The binder 40 plays a similar role as the sealing structure, and therefore, can replace the sealing structure used in the prior art, thus reducing the overall thickness of the battery caused by the sealing structure in the prior art, thereby improving space utilization of the battery 100 and increasing the energy density of the battery 100.

The foregoing descriptions are merely exemplary embodiments of this application, but are not intended to limit this application. Any modifications, equivalent substitutions, and improvements made without departing from the spirit and principles of this application shall fall within the protection scope of this application.

## Claims

1. A battery (100), comprising a battery cell (10), **characterized in that**, the battery (100) further comprises:
a first housing body (20) comprising a first surface (201) and a second surface (202) that are opposite to each other, the second surface (202) is located between the battery cell (10) and the first surface (201), and the first housing body (20) is provided with a via hole (21) penetrating through the first surface (201) and the second surface (202); and
an electrode post (30) fixed in the via hole (21) by a binder (40) and electrically connected to the battery cell (10).

2. The battery (100) according to claim 1, **characterized in that**, the electrode post (30) protrudes outside of the first surface (201) of the first housing body (20) of the battery (100) by a height of less than or equal to 0.3 mm.

3. The battery (100) according to claim 2, **characterized in that**, the electrode post (30) is flush with the first surface (201).

4. The battery (100) according to claim 1, **characterized in that**, the electrode post (30) protrudes outside of the second surface (202) of the first housing body (20) of the battery (100) by a height of less than or equal to 0.3 mm.

5. The battery (100) according to claim 4, **characterized in that**, the electrode post (30) is flush with the second surface (202).

6. The battery (100) according to claim 1, **characterized in that**, the electrode post (30) is provided with a groove (31).

7. The battery (100) according to claim 6, **characterized in that**, a depth of the groove (31) is in the range of from 0 mm to 0.1 mm.

8. The battery (100) according to claim 1, **characterized in that**, the binder (40) is at least one selected from the group consisting of epoxy adhesive, structural adhesive, or ultraviolet adhesive.

9. The battery (100) according to claim 1, **characterized in that**, a thickness of the binder (40) is in the range of from 0.005 mm to 0.1 mm.

10. The battery (100) according to claim 1, **characterized in that**, the electrode post (30) comprises an electrode post body (301) and an electrode post pad (302) connected to the electrode post body (301), a width of the electrode post pad (302) is greater than a width of the electrode post body (301), the electrode post body (301) is fixed in the via hole (21), the electrode post pad (302) is fixed on the first surface (201) or the second surface (202), the electrode post body (301) is flush with the first surface (201) and the second surface (202), and the electrode post pad (302) protrudes outside of the first surface (201) or the second surface (202) by a height of less than or equal to 0.3 mm.

11. The battery (100) according to claim 1, **characterized in that**, the battery (100) further comprises a second housing body (50) configured to connect to the first housing body (20), and the battery cell (10) is accommodated in the second housing body (50).

12. An electric device (200), **characterized in that**, the electric device (200) comprises the battery (100) according to any one of claims 1 to 11.
